# EUROPEAN PATENT APPLICATION

(11) **EP 4 503 284 A2**
(43) Date of publication of application: **05.02.2025**
(21) Application number: 24170857.7
(22) Date of filing: 17.04.2024
(51) Int. Cl.: H01M 50/204, H01M 50/30, H01M 50/251, H01M 10/627, A62C 3/16, H01M 10/613, H01M 50/383

(54) **ENERGY STORAGE SYSTEM**

(30) Priority: 19.05.2023 KR 20230065148
(71) Applicant: SK On Co., Ltd., Seoul 03161 (KR)
(72) Inventor: JUNG, Jae Won, 34124 Daejeon (KR); PARK, Byung Jun, 34124 Daejeon (KR); PARK, Chan Ho, 34124 Daejeon (KR); BAEK, Moo Han, 34124 Daejeon (KR)
(74) Representative: Prüfer & Partner mbB Patentanwälte · Rechtsanwälte

(57) **Abstract**

An energy storage system may include: a cabinet including a mounting portion capable of mounting a plurality of battery modules thereon and a door member (300) capable of being opened and closed; and a venting portion (500) emitting gas occurring in an internal space of the cabinet, wherein the venting portion includes at least one inlet (510) communicating with the internal space and allowing the gas to flow into the inlet; and at least one outlet (520) disposed in an outer surface of the cabinet and communicating with the inlet.

## Description

### BACKGROUND

### 1. FIELD

Embodiments of the present disclosure relate to an energy storage system.

### 2. DESCRIPTION OF RELATED ART

An energy storage system (ESS) may be a device or system which may increase overall power usage efficiency by storing power that has already been produced and then supplying the stored power when the power is necessary.

There is a need for technology that may rapidly manufacture and supply the energy storage systems in accordance with an increasing demand for this energy storage system. In particular, there is a need for an energy storage system to have a portable structure to rapidly install the energy storage system where this system is needed, or to rapidly expand the energy storage system as a necessary power value is increased.

Meanwhile, a fire may occur in a process of using the energy storage system. In this case, there is a risk of explosion as an internal pressure of the energy storage system is increased due to a gas caused by the fire. Accordingly, there is a need for a structure enabling safe emission of the gas even when the gas occurs in the energy storage system.

### SUMMARY

An aspect of the present disclosure may provide an energy storage system modularized and manufactured to be transported in a complete manufacturing state, thus enabling rapid implementation of a large-capacity of an energy source at an installation destination.

Another aspect of the present disclosure may provide an energy storage system having a structure enabling safe emission of gas occurring in the system.

According to an aspect of the present disclosure, an energy storage system may include: a cabinet including a mounting portion capable of mounting a plurality of battery modules thereon and a door member capable of being opened and closed; and a venting portion emitting gas occurring in an internal space of the cabinet, wherein the venting portion includes at least one inlet communicating with the internal space and allowing the gas to flow into the inlet; and at least one outlet disposed in an outer surface of the cabinet and communicating with the inlet.

The cabinet may further include a top frame disposed above the mounting portion and a bottom frame disposed below the mounting portion, and the outlet may be open in the top frame toward the bottom frame.

The door member may face the mounting portion in a first direction, the top frame may include a first surface facing the door member in a second direction, perpendicular to the first direction, and the outlet may be disposed in the first surface.

A separation space may be formed between the first surface and the door member, and the outlet may communicate with the separation space.

The top frame may include a hollow portion communicating with each of the inlet and the outlet.

The top frame may further include a second surface exposed to the internal space, and the inlet may be disposed in the second surface.

The at least one inlet or the at least one outlet may be disposed in a third direction, perpendicular to both the first direction and the second direction.

The door member may further include a cooling device capable of supplying a cooling medium to the internal space, and at least one of the inlet or the outlet may be disposed in the door member.

The cooling device may include a drain pipe allowing condensate occurring in the cooling device to flow, and the inlet and the outlet may communicate with the drain pipe.

The inlet may be disposed in one end of the drain pipe, and the outlet may be disposed in the other end of the drain pipe.

The system may further include: a fire extinguishing portion extinguishing a flame occurring in the internal space of the cabinet; and a guide portion dividing a front space formed between the plurality of battery modules and the door member into a plurality of regions.

The system may further include an electronic component disposed on the inside of the door member, wherein the fire extinguishing portion and the electronic component are disposed together in one of the plurality of regions divided by the guide portion.

The fire extinguishing portion may include a fire extinguishing agent maintaining a solid state at a temperature of a preset temperature or less and having an aerosol form at a temperature of the preset temperature or more.

The cabinet may further include a partition dividing the internal space, and the plurality of battery modules may be disposed on both sides of the partition in a height direction of the cabinet.

The system may further include a plurality of lifting holes disposed in the cabinet and allowing a transport device to be inserted into the holes.

### BRIEF DESCRIPTION OF DRAWINGS

The above and other aspects, features and advantages of the present disclosure will be more clearly understood from the following detailed description taken in conjunction with the accompanying drawings, in which:
FIG. 1 is an exemplary view showing a plurality of energy storage systems connected to each other according to an embodiment of the present disclosure;
FIG. 2 is a perspective view of the energy storage system whose door portion is opened according to an embodiment of the present disclosure;
FIG. 3 is a perspective view of a battery module according to an embodiment of the present disclosure;
FIG. 4 is an exemplary view showing that the battery module is inserted into an internal space of the energy storage system according to an embodiment of the present disclosure;
FIG. 5 is an exemplary view showing that the guide portion and fixing member of the energy storage system are coupled to each other according to an embodiment of the present disclosure;
FIG. 6 is an exemplary view showing a top side of an internal frame in the energy storage system according to an embodiment of the present disclosure;
FIG. 7 is a bottom perspective view of a top frame of the energy storage system according to an embodiment of the present disclosure;
FIG. 8 illustrates exemplary flow of a gas occurring in the energy storage system according to an embodiment of the present disclosure;
FIG. 9 is an exemplary cross-sectional view of the energy storage system according to an embodiment of the present disclosure;
FIG. 10 is an exemplary view showing a gas emission structure formed in a cooling device of the energy storage system according to an embodiment of the present disclosure;
FIG. 11 is an exemplary view showing the gas emit structure formed in the cooling device of the energy storage system according to an embodiment of the present disclosure; and
FIG. 12 is a perspective view of the energy storage system according to an embodiment of the present disclosure.

### DETAILED DESCRIPTION

Prior to the detailed description of the embodiments of the present disclosure, the terms or words used in the specification and claims should not be construed as limited to ordinary or dictionary meanings, and should be interpreted as having a meaning and concept consistent with the technical idea of the present disclosure based on the principle that the inventor may appropriately define the concept of the terms or words to describe his/her invention in the best way.

The same reference numerals or symbols in each drawing attached to the specification indicate parts or components that perform substantially the same function. For convenience of description and understanding, even different embodiments may be described using the same reference numerals or symbols. That is, even if components having the same reference number are shown in a plurality of drawings, the plurality of drawings do not all represent one embodiment.

In the following description, singular expressions include plural expressions unless the context clearly dictates otherwise. It should be understood that terms such as "include" or "comprise" are intended to designate the presence of features, numbers, steps, operations, components, parts, or combinations thereof described in the specification, and do not exclude in advance the possibility of the presence or addition of one or more other features or numbers, steps, operations, components, parts, or combinations thereof.

In addition, in the following description, expressions such as top portion, bottom portion, side surface, front surface, rear surface, etc. are expressed based on the direction shown in the drawing, and it should be noted in advance that when the direction of the corresponding object is changed, expressions may be expressed differently.

In addition, in the specification and claims, terms including ordinal numbers such as "first", "second", etc. may be used to distinguish components. These ordinal numbers are used to distinguish identical or similar components from each other, and the meaning of the term should not be interpreted limitedly due to the use of these ordinal numbers. For example, a component combined with the ordinal number should not be interpreted as limiting the order of use or arrangement by the number. If necessary, the ordinal numbers may be used interchangeably.

Hereinafter, embodiments of the present disclosure will be described with reference to the attached drawings. However, the spirit of the present disclosure is not limited to the presented embodiments of the present disclosure. For example, a person skilled in the art who understands the spirit of the present disclosure may suggest other embodiments that are included within the scope of the spirit of the present disclosure through addition, change, or deletion of components, but this may be also included within the scope of the spirit of the present disclosure. The shapes and sizes of components in the drawings may be exaggerated for clearer description.

Hereinafter, exemplary embodiments of the present disclosure will now be described in detail with reference to the accompanying drawings.

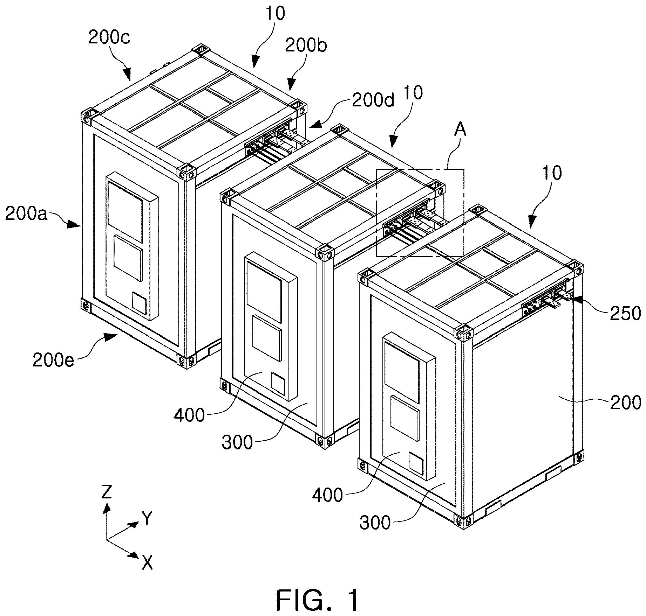

FIG. 1 is an exemplarily view showing a plurality of energy storage systems 10 connected to each other.

The energy storage system 10 may be an energy source and used for home or industrial purpose. The plurality of energy storage systems 10 may be electrically connected to each other as shown in FIG. 1.

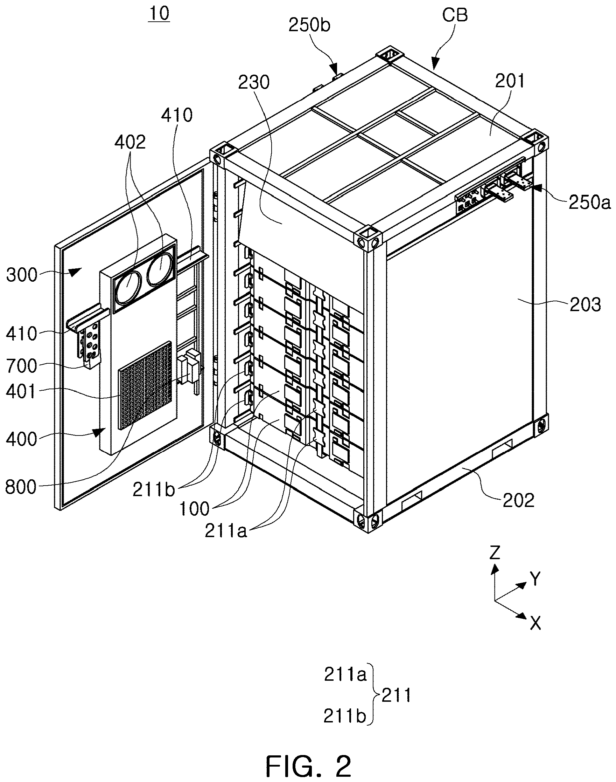

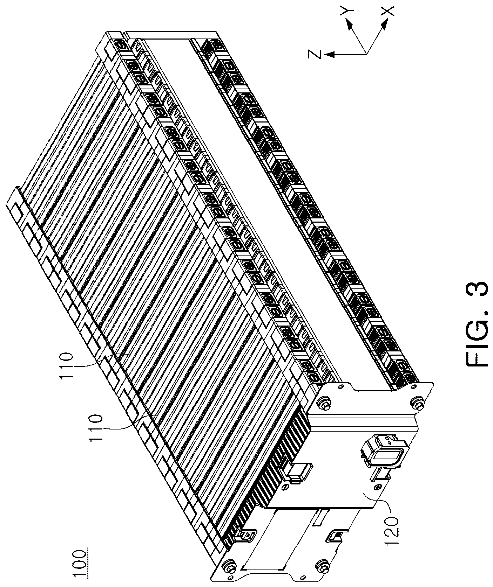

Any one of the energy storage system 10 may include a cabinet CB where a battery module (100 in FIGS. 2 and 3 for example) is stored.

The cabinet CB may include a housing 200 having an internal space where the battery module 100 is stored and at least one side open, and a door member 300 capable of being opened and closed by being coupled to the housing 200 and capable of closing the internal space.

A cooling device 400 may be disposed on the door member 300. The cooling device 400 may supply a cooling medium into the housing 200. As another example, the cooling device 400 may suction the cooling medium inside the housing 200. The cooling medium may indicate a gas or a fluid which may cool the internal space of the housing 200 and components disposed in the internal space (e.g., the battery modules (100 in FIG. 2)).

For example, the cooling device 400 may include an air conditioning device which may control the temperature and humidity of the internal space of the housing 200 for the battery module (100 in FIG. 2) to be operated in an appropriate environment.

In exemplary embodiments, each energy storage system 10 may include one or more cooling portions 400. For example, as shown in FIG. 1, each cooling portion 400 may be disposed individually in the cabinet CB of the energy storage system 10.

In this way, the individual cooling portion 400 may be disposed in each of the energy storage system 10, and each energy storage system 10 may be cooled independently. For example, an event (e.g., a phenomenon where a temperature inside or outside the battery module is increased to a safe temperature or more) may occur in any one of the plurality of energy storage systems 10. In this case, the cooling device 400 of the energy storage system 10 may supply the cooling medium with a higher output to thus rapidly control the event. Hence, having the cooling device 400 individually in each of the energy storage system 10 allows faster and better temperature control of each energy storage system 10 and may prevent overheating of the energy storage system 10 more efficiently.

The output of the cooling device 400 may be adjusted in various ways in response to a temperature of each energy storage system 10, thus increasing cooling efficiency of an entire system including the plurality of energy storage systems 10.

The energy storage system 10 according to the exemplary embodiments may be movable. For example, the energy storage system 10 may be manufactured as a complete product into which the battery module (100 in FIG. 2 for example) is stored and fixed, and then be moved to its installation site by using a transport device (for example, a forklift or a crane).

Accordingly, the plurality of energy storage systems 10 may be manufactured repeatedly in a factory, a required number of energy storage systems may be transported to the installation site, and then be electrically connected to each other, thereby rapidly implementing an energy source of a capacity desired by a user.

The plurality of energy storage systems 10 may be electrically connected to each other through a connection portion. For example, referring to FIG. 1, the connection portion may be exposed to one surface of the cabinet CB included in any one energy storage system 10, and this connection portion may be connected to the connection portion of another neighboring energy storage system 10. In this way, the plurality of energy storage systems 10 may be electrically connected to each other to thus implement a large-capacity energy source.

Hereinafter, the configuration of the energy storage system 10 is described in more detail with reference to FIGS. 2 through 6.

FIG. 2 is a perspective view of the energy storage system whose door portion 300 is opened.

FIG. 3 is a perspective view of the battery module 100.

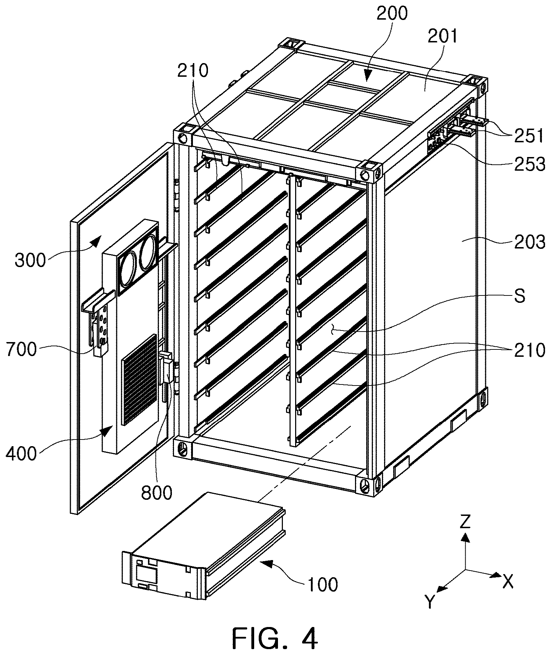

FIG. 4 is an exemplary view showing that the battery module 100 is inserted into an internal space S of the energy storage system 10.

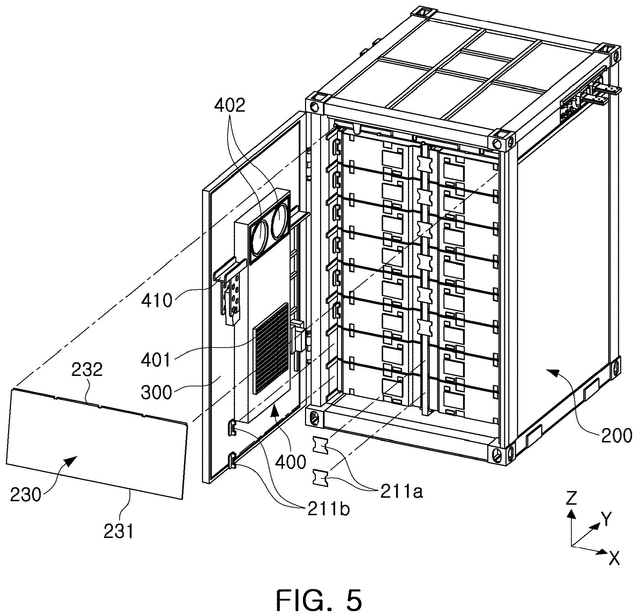

FIG. 5 is an exemplary view showing that a guide portion 230 and fixing member of the energy storage system 10 are coupled to each other.

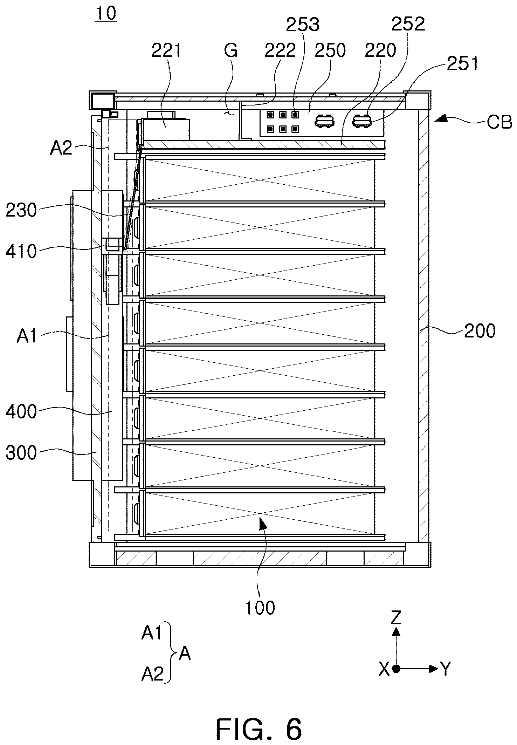

FIG. 6 is an exemplary view showing a top side of an internal frame in the energy storage system 10.

The energy storage system 10 and the battery module 100 described with reference to FIGS. 2 through 6 may correspond to the energy storage system 10 and the battery module 100 described with reference to FIG. 1, and their redundant descriptions may thus be omitted.

The energy storage system 10 may include the plurality of the battery modules 100 and the cabinet CB in which the battery modules are accommodated.

The cabinet CB may include the housing 200 having the internal space where the plurality of the battery modules 100 are accommodated, a mounting portion 210 disposed in the housing 200 for the battery module 100 to be mounted thereon, and the door member 300 capable of being opened and closed by being coupled to the housing 200.

Referring to FIG. 3, the battery module 100 may include one or more battery cells 110 capable of being charged and discharged to store or emit electrical energy. For example, the battery cell 110 included in the battery module 100 may be at least one of a pouch-type secondary battery, a cylindrical secondary battery, and a prismatic secondary battery.

Referring to FIG. 3, in the battery module 100, the battery cells 110 may be stacked in one direction, e.g., in a Y-axis direction. However, the stacking direction shown in FIG. 3 is only an example, and the stacking direction of the battery cells 110 in the battery module 100 may be set in various ways. For example, the battery module 100 and the battery cell 110 may be stacked in an X-axis direction or a Z-axis direction.

The battery module 100 may further include a module cover 120 supporting the stacked battery cells 110. For example, as shown in FIG. 3, the module cover 120 may cover at least a portion of the front surface, rear surface (or a surface perpendicular to a Y-axis) and side surface (or a surface perpendicular to an X-axis) of a stacked body where the battery cells 110 are stacked. In this case, the top and lower surfaces (or surfaces perpendicular to a Z-axis) of the battery cell 110 may be exposed outward from the battery module 100, or a cooling plate surrounding at least a portion of the battery cell 110 may be exposed outward from the battery module 100. For example, the cooling plate may surround at least a portion of the battery cell 110 and may be in contact with the battery cell 110, thus protecting the battery cell 110 from an external impact, and simultaneously emitting heat occurring in the battery cell 110 rapidly outward from the battery module.

Referring to FIG. 2, in the housing 200, the plurality of battery modules 100 may be stacked in one direction while having a predetermined gap therebetween. For example, referring to FIG. 2, the battery modules 100 may be inserted into the housing 200 in a first direction (or the Y-axis direction), and stacked in a second direction (or the Z-axis direction) perpendicular to the first direction (or the Y-axis direction).

In the housing 200, the battery modules 100 may be arranged in two rows as shown in FIG. 2, which is only an example. In another examples, the battery modules 100 may be arranged in one row or three or more rows.

The housing 200 may be a structure in which the battery module 100 may be accommodated.

The housing 200 may be a box-shaped member in which a top frame 201, a bottom frame 202, and a plurality of side frames 203 are coupled with one another.

The housing 200 may have at least one side open, and the battery module 100 may be inserted into the housing 200 through the open one side. FIG. 2 shows that the housing 200 has a shape of a hexahedron having one side open, which is only an example, and a specific shape of the housing 200 may be appropriately changed based on a user's need.

The housing 200 may include a material having predetermined rigidity. For example, the housing 200 may include a metal material such as iron, aluminum, or stainless steel. However, in addition to the metal, the housing 200 may be made of any material as long as the corresponding material has enough rigidity to maintain an external appearance of the housing 200 and protect the battery module 100 in the housing 200. For example, the housing 200 may have shape of a cube or rectangular prism.

The door member 300 may be opened and closed by being coupled to one open side of the housing 200. For example, the door member 300 may be hinged to one open side of the housing 200, and the user may thus open and close the door member 300 by pushing or pulling the same.

In each of the energy storage systems 10 may include at least one connection portion 250 used for its electrical connection with another neighboring energy storage system. For example, the connection portion 250 of each energy storage systems 10 may include a bar-type member made of a conductive material (e.g., metal), and may be disposed on one side of the housing 200 to be exposed to an external environment.

The connection portion 250 may be electrically connected to the plurality of the battery modules 100 arranged in the housing 200.

The connection portion 250 may include a first connection portion 250a and a second connection portion 250b which are disposed on opposite sides of the housing 200. For example, referring to FIG. 2, the first connection portion 250a may be disposed on a first side frame 203 of the housing 200, and the second connection portion 250b may be disposed on a second side frame 203 opposite to the first side frame 203 of the housing 200.

The first connection portion 250a and the second connection portion 250b may be symmetrical to each other.

The energy storage system 10 may be electrically connected to other energy storage systems disposed on both sides of the energy storage system 10 through the first connection portion 250a and the second connection portion 250b.

The battery module 100 may be mounted on the mounting portion 210 disposed in the housing 200. For example, the mounting portion 210 may be disposed on an inner surface of the housing 200 while having a shape of a shelf or rail extending in one direction (e.g., the Y-axis direction), and the battery module may be inserted into the housing in an extension direction of the shelf or the rail, and then be fixed into the housing.

However, a specific shape of the mounting portion 210 may not be limited to the shape shown in the drawing. The mounting portion 210 may have any shape or structure enabling the battery module 100 to be stably disposed in the housing 200.

The mounting portion 210 may be disposed between the top frame and lower frame of the housing. The top frame may configure a top surface of the housing, and the bottom frame may configure a bottom surface of the housing. The side frames may respectively be connected to the top frame and the bottom frame to form the side surfaces of the housing.

The battery module 100 may be coupled to a fixing member 211, and fixed into the housing 200 while being mounted on the mounting portion 210. A part of the fixing member 211 may be coupled to the battery module 100, and the other part may be coupled to the housing 200. For example, the fixing member 211 may be a bracket mechanically fastened to the battery module 100.

The fixing member 211 may include a first fixing member 211a and a second fixing member 211b fastened to different portions of the battery module 100. For example, referring to FIG. 2, the first fixing member 211a and the second fixing member 211b may respectively be coupled to both sides of any one battery module 100.

The energy storage system 10 may further include the cooling device 400 which may cool the battery module 100 accommodated in the housing 200. For example, referring to FIG. 2, the cooling device 400 may be coupled to the door member 300.

The cooling device 400 may cool the battery module 100 by discharging the cooling medium (e.g., cooling air) to the internal space of the housing 200.

The cooling device 400 may include a discharge portion 401 through which the cooling medium is discharged, and a suction portion 402 through which the cooling medium discharged from the discharge portion 401 is suctioned and recovered.

The discharge portion 401 and the suction portion 402 of the cooling device 400 may be disposed on the inside of the door member 300. Here, the "inside" of the door member 300 may indicate its part facing the internal space of the housing 200 as the door member 300 is closed.

For example, as shown in FIG. 2, the cooling device 400 may be coupled to the door member 300 for the discharge portion 401 and the suction portion 402 to be disposed on the inside of the door member 300. As the door member 300 is closed, the discharge portion 401 and the suction portion 402 may naturally face the battery module 100 accommodated in the internal space of the housing 200.

In the cooling device 400, the discharge portion 401 and the suction portion 402 may be vertically disposed (in the Z-axis direction). For example, the discharge portion 401 through which the cooling medium is discharged may be disposed at a bottom end of the cooling device 400, and the suction portion 402 through which the cooling medium is suctioned may be disposed at a top end of the cooling device 400. The cold cooling medium emitted from the discharge portion 401 may flow upward by having a temperature gradually increased through its heat exchange with the battery module 100. Therefore, the cooling medium may implement an efficient cooling flow in the housing 200 by disposing the suction portion 402 above the discharge portion 401.

In the exemplary embodiments, the cooling device 400 of the energy storage system 10 may be disposed in the housing 200 to face the battery module 100. Accordingly, the cold cooling medium may be supplied directly from the cooling device 400 to the battery module 100, thus securing cooling efficiency increased compared to a case where the cooling device 400 is disposed on the outside of the housing 200.

The energy storage system 10 may further include the guide portion 230 which may guide the cooling medium discharged from the cooling device 400 to flow into the housing 200. For example, referring to FIG. 2, the guide portion 230 may have at least a portion formed in a flat plate shape, and may be disposed on back of the cooling device 400.

The guide portion 230 may guide a flow path of the cooling medium. For example, the guide portion 230 may be disposed between the cooling device 400 and the battery module 100, thus blocking the cold cooling medium discharged from the discharge portion 401 from flowing directly to the suction portion 402. Accordingly, a flow direction of the cold cooling medium discharged from the discharge portion 401 may be guided toward the battery module 100.

The guide portion 230 may have one surface facing the suction portion 402, and the other surface opposite to the one surface and facing some of the battery modules 100.

When defining a direction in which the cooling device 400 and the battery module 100 face each other as the first direction (or the Y-axis direction), the guide portion 230 may be inclined with respect to the first direction (or the Y-axis direction). For example, referring to Referring to FIG. 2, as the door member 300 is closed, the cooling device 400 coupled to the door member 300 may face at least some of the battery modules 100 in the first direction (or the Y-axis direction), and at least a portion of the guide portion 230 may be installed in front of the battery module 100 while being inclined in the first direction (or the Y-axis direction).

Referring to FIG. 2, the guide portion 230 may be inclined to have a bottom edge closer to the door member 300 than its upper edge. In this case, as the door member 300 is closed, the bottom edge of the guide portion 230 may be adjacent to the cooling device 400.

According to some embodiments, the energy storage system 10 may further include an auxiliary guide portion 410 disposed on the door member 300. The auxiliary guide portion 410 may guide the flow of the cooling medium together with the guide portion 230.

For example, referring to FIG. 2, the auxiliary guide portion 410 may be disposed on one side of the cooling device 400 and extend horizontally to come into contact with an end of the guide portion 230 as the door member 300 is closed. The auxiliary guide portion 410 may block the cooling medium from flowing into a gap between the guide portion 230 and an inner surface of the door member 300. Accordingly, it is possible to more reliably block the cold cooling medium discharged from the discharge portion 401 from flowing directly toward the suction portion 402.

In the exemplary embodiments, the auxiliary guide portion 410 may be disposed on one side of the cooling device 400. For example, referring to FIG. 2, the cooling device 400 may protrude from the inside of the door member 300 while having a predetermined thickness, and the auxiliary guide portions 410 may be disposed on both sides of the cooling device 400 and block the cooling medium from flowing into the gap between the guide portion 230 and the door member 300.

The auxiliary guide portion 410 may be disposed between the discharge portion 401 and the suction portion 402 of the cooling device 400 based on a height direction (e.g., the Z-axis direction) of the housing 200.

If a fire occurs in the cabinet CB, there is a risk that the battery module 100 or an electronic component 800 in the cabinet CB may be damaged by a flame. Examples of the electronic component 800 may include various types of sensors including a temperature sensor and a voltage sensor, a signal transmission device, various control devices including a battery management system (BMS), and a circuit board connected thereto. However, the electronic component 800 is not limited to the above component, and may be understood as a general term for an electrical component necessary for the smooth use and maintenance of the energy storage system 10.

The electronic component 800 may be disposed in the cabinet CB. For example, the electronic component 800 may be disposed on the inside of the door member 300 as shown in FIG. 2.

It is necessary to extinguish the fire rapidly to prevent the electronic component 800 from being damaged by the fire. To this end, the energy storage system 10 may further include a fire extinguishing portion 700 which may extinguish the flame occurring in the cabinet CB.

The fire extinguishing portion 700 may include a fire extinguishing agent which may suppress the flame, and emit the fire extinguishing agent into the internal space S of the cabinet CB in a fire occurrence situation.

The fire extinguishing agent may use a variety of the fire extinguishing agents. For example, the fire extinguishing agent may include a solid aerosol having a solid form at an operation temperature (or a preset temperature) or less and an aerosol form at the operation temperature (or the preset temperature) or more. Accordingly, in the fire situation, the aerosol, which is the fire extinguishing material, may be generated as the fire extinguishing agent combusts. For example, the solid aerosol used as the fire extinguishing agent may include a potassium component to thus block an oxidation chain reaction of the combustion.

The fire extinguishing portion 700 may be adjacent to the electronic component 800. For example, referring to FIG. 2, the electronic component 800 may be disposed on the inside of the door member 300, and the fire extinguishing portion 700 may also be disposed on the inside of the door member 300 while being adjacent to the electronic component 800.

As the door member 300 closes the internal space S of the housing 200, at least a portion of the fire extinguishing portion 700 may be exposed to the internal space S of the housing 200. When the fire occurs, the fire extinguishing agent may be sprayed as aerosol-type particles into the internal space S of the housing 200, and the sprayed aerosol may reach the flame and act as an extinguisher.

The guide portion 230 or the auxiliary guide portion 410 may minimize a region (or a volume) to be extinguished by the fire extinguishing portion 700. For example, the guide portion 230 of the cabinet CB may divide a space between the front surface of the battery module 100 and the door member 300 into two or more spaces, thus reducing a space to be covered by the aerosol sprayed from the fire extinguishing portion 700 for suppressing the fire.

For example, referring to FIG. 6, the guide portion 230 may divide a front space A formed between the battery module 100 and the door member 300 and in contact with the door member 300 into a first region A1 and a second region A2. The first region A1 may be a space between a bottom surface of the guide portion 230 and the battery module 100, and the second region A2 may be a space between a top surface of the guide portion 230 and the door member 300.

Here, the electronic component 800 and the fire extinguishing portion 700 may be disposed in the same region. For example, both the electronic component 800 and the fire extinguishing portion 700 may be disposed in the first region A1. In this case, the fire extinguishing agent of the fire extinguishing portion 700 may be sprayed intensively in the first region A1. Therefore, the fire extinguishing agent may effectively protect the electronic component 800 from the flame.

Referring to FIG. 4, the battery module 100 may be inserted into the mounting portion 210 disposed in the housing 200 and accommodated in the internal space S. The mounting portion 210 may have the rail shape extending in one direction (e.g., the Y-axis direction) from the inside of the housing 200, and at least a portion of the battery module 100 may thus be mounted thereon.

For example, referring to FIGS. 4 and 5, the mounting portion 210 may extend in the housing 200 in the first direction (e.g., the Y-axis direction). Accordingly, the battery module 100 may be inserted into the mounting portion 210 in the first direction (or the Y-axis direction). However, an insertion direction of the battery module 100 is not limited thereto. For example, the mounting portion 210 of the housing 200 may be inclined with respect to the first direction (or the Y-axis direction). Accordingly, the battery module 100 may be inserted while being inclined with respect to the first direction (or the Y-axis direction).

In the housing 200, the battery module 100 may be accommodated in the plurality of rows. For example, FIG. 4 shows that the battery modules 100 are arranged in two rows. The housing 200 may further include a partition 204 dividing the internal space S, and the mounting portion 210 may be disposed on each of two sides of the partition 204 for the battery module 100 to be mounted thereon.

The battery modules 100 may each be supported by the mounting portion 210 and arranged in layers in the height direction (e.g., the Z-axis direction).

In a process of accommodating the battery module 100 in the mounting portion 210, the fixing member 211 fixing the battery module 100 and the mounting portion 210 to each other may be assembled together with the battery module 100. For example, the second fixing members 211b may respectively be coupled to the side frame 203 of the housing 200 and the battery module 100, and the first fixing members 211a may be coupled to both the partition 204 and the two battery modules 100.

The plurality of first fixing members 211a and the plurality of the second fixing members 211b may be provided, and arranged to be parallel to each other in an arrangement direction of the battery modules 100.

The fixing member 211 may fix the battery module 100 to prevent its separation from the mounting portion 210 in a process of transporting the energy storage system 10.

The guide portion 230 may be coupled to the housing 200 by being inclined with respect to the first direction (or the Y-axis direction) in a state where the battery module 100 is completely stored on the inside of the mounting portion 210. However, an assembly sequence of the guide portion 230 is not limited thereto. For example, the guide portion 230 may be coupled to the housing 200 simultaneously as the battery module 100 is accommodated in and fixed to the housing 200. Alternatively, the guide portion 230 may be rotatably coupled to the housing 200 while having its upper edge as an axis. In this case, the guide portion 230 may be rotated upward to secure a space where the battery module 100 is to be inserted, and the battery modules 100 may then be inserted and assembled to each other.

In the exemplary embodiments, the guide portion 230 may have one edge adjacent to an internal frame 220. The internal frame 220 may be a plate-shaped member fixed to the housing 200 and disposed above the battery module 100, and may face the battery module 100 in the height direction (e.g., the Z-axis direction) of the housing. A battery control system (e.g., 221 in FIG. 6) of the energy storage system 10 may be disposed on a top surface of the internal frame 220.

Referring to FIGS. 4 and 5, a first edge 231 of the guide portion 230 may be adjacent to the cooling device 400 while the door member 300 is closed, and a second edge 232, which is opposite to the first edge 231, may be coupled to the front of the battery module 100 while being adjacent to the internal frame 220.

While the door member 300 is closed, the first edge 231 of the guide portion 230 may be disposed between the discharge portion 401 and the suction portion 402 of the cooling device 400. In addition, the first edge 231 of the guide portion 230 may be adjacent to an end of the auxiliary guide portion 410 disposed on at least one side of the cooling device 400.

The guide portion 230 may be inclined with respect to the first direction (or the Y-axis direction). That is, the first edge 231 of the guide portion 230 may be closer to the door member 300 than the second edge 232.

The energy storage system 10 may be electrically connected to another energy storage system through the connection portion 250.

Any one connection portion 250 may include one or more first connection members 251 electrically connected to the plurality of the battery modules 100 and an insulating member 252 coupled to the housing 200 and supporting the first connection member 251.

The first connection member 251 may include the conductive material (e.g., a metal) and may serve as a type of high voltage terminal (or high voltage socket) connected to each of the plurality of the battery modules 100. For example, the first connection member 251 may include a power terminal electrically connected to each of the plurality of the battery modules 100.

The first connection member 251 may have a bar shape extending in one direction. For example, the first connection member 251 may be a busbar including the conductive material. The first connection member 251 may have one end inserted into the housing 200, and the other end, which is opposite to the one end, exposed outward from the housing 200.

While being inserted into the housing, the first connection member 251 may have at least a portion protruding outward from the housing 200. Here, a direction in which the first connection member 251 protrudes outward from the housing 200 may be the third direction (or the X-axis direction) or the direction, perpendicular to the first direction (or the Y-axis direction) in which the battery module 100 is inserted into the mounting portion 210.

The first connection member 251 may be fixed to the housing 200 while being supported by the insulating member 252. The insulating member 252 may surround at least portion of the first connection member 251. The insulating member 252 may include a non-conductive material (e.g., plastic) to prevent the first connection member 251 from being electrically short-circuited from the housing 200.

The connection portion 250 may further include a second connection member 253 spaced apart from the first connection member 251.

The second connection member 253 may perform a function different from that of the first connection member 251. For example, the second connection member 253 may be a low-voltage terminal (or low-voltage socket), and may be used for the energy storage system 10 to transmit and receive a signal with an external device. Alternatively, when the first connection member 251 is used as a direct current connection terminal, the second connection member 253 may be used as an alternating current connection terminal or an auxiliary power terminal.

The plurality of connection portions 250 may be provided in any one energy storage system 10. The first connection portion 250a and the second connection portion 250b may respectively be disposed on opposite surfaces of the housing 200.

When the door member 300 is disposed on the front surface of the housing 200, the first connection portion 250a and the second connection portion 250b may be disposed on both the side surfaces of the housing 200. The first connection portion 250a and the second connection portion 250b may be disposed to avoid the door member 300, thus avoiding interference of the door member 300 with the first connection portion 250a and the second connection portion 250b in a process of opening and closing the door member 300. Also, as an example, as illustrated in the embodiment of FIG.1, FIG. 2 and FIG. 4, each of the first and second connection portions 250a and 250b may include two first connection members 251, and six second connection members 253.

According to some embodiments, as illustrated in the embodiment of FIG.1, the housing 200 may include a front surface 200a, a rear surface 200b, a plurality of side surfaces 200c and 200d and a bottom surface 200e. And as illustrated in the embodiment of FIG.1, FIG. 2 and FIG. 4, when the door member 300 is disposed on the front surface 200a of the housing 200, the first connecting portion 250a and the second connecting portion 250b may be disposed on both side surfaces 200c and 200d of the housing 200. According to some embodiments, the first connection portion 250a and the second connection portion 250b may be disposed between the top frame 201 of the housing 200 and the battery module 100 based on the height direction (e.g., the Z-axis direction) of the housing 200.

Any one connection portion 250 may have the plurality of first connection members 251. For example, the first connection portion 250a disposed on one surface of the housing 200 and the second connection portion 250b disposed on the other surface of the housing 200 may each include the plurality of first connection member 251.

In any one connection portion 250, the plurality of first connection members 251 may have polarities different from each other. For example, the first connection portion 250a may have the pair of the first connection members 251 respectively corresponding to a positive electrode and a negative electrode.

In any one energy storage system 10, the first connection member 251 of the first connection portion 250a and the first connection member 251 of the second connection portion 250b may protrude in opposite directions. Through this structure, the first connection portion 250a of any one energy storage system 10 may face the second connection portion 250b of another neighboring energy storage system 10, thus providing more easier connection between the energy storage systems 10.

The housing 200 may further include the internal frame 220 disposed above the battery module 100. A separation space G where various components electrically connected to the battery module 100 may be disposed may be formed between the internal frame 220 and the top surface of the housing 200.

The connection portion 250 may be disposed on a top side of the internal frame 220. It is possible to prevent a harmful element such as heat, gas, or flame occurring in the battery module 100 from coming into direct contact with the connection portion 250 by separating the connection portion 250 from the space where the battery module 100 is disposed.

In addition, the battery control system 221 and a circulation system 222 may be disposed on the top side of the internal frame 220. The battery control system 221 may include the battery management system (BMS) module, a battery protective unit (BPU) module, or the like. The battery control system 221 may be seated on and assembled to the internal frame 220 and may safely control the battery module 100 disposed under the internal frame 220.

The circulation system 222 may guide the flow direction of the cooling medium in the separation space G. For example, the circulation system 222 may include one or more circulation fans 222a to guide the cooling medium flowing into the separation space G to flow from the rear of the housing 200 to the front. The cooling medium may cool the connection portion 250, the battery control system 221, the circulation system 222, and a blocking portion 223 while flowing in the separation space G.

At least one of the battery control system 221 and the circulation system 222 may receive power by being electrically connected to the external device through the second connection portion 250b. Alternatively, at least one of the battery control system 221 and the circulation system 222 may exchange signal information by being electrically connected to the external device through the second connection portion 250b.

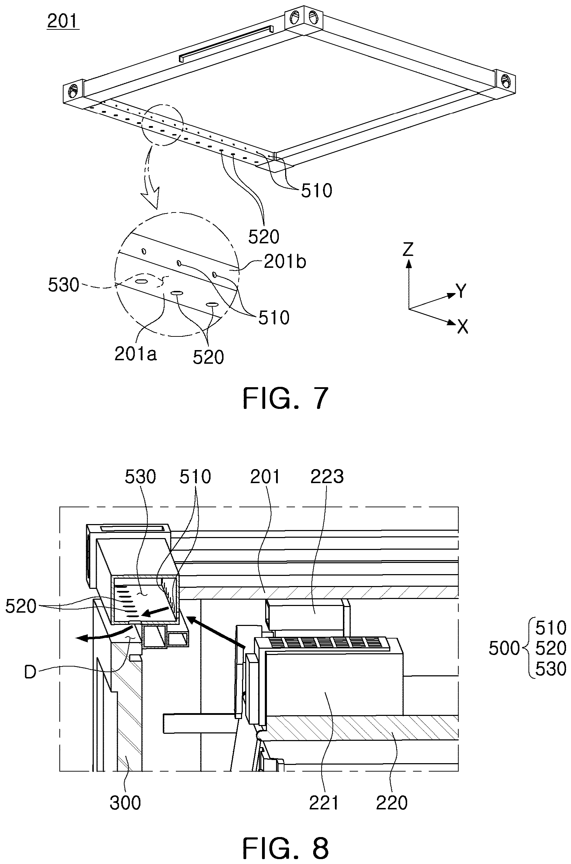

FIG. 7 is a bottom perspective view of the top frame 201 of the energy storage system. FIG. 8 illustrates exemplary flow of the gas occurring in the energy storage system 10.

The energy storage system 10 described with reference to FIGS. 7 and 8 may include all features of the energy storage system 10 described with reference to FIGS. 1 through 6, and its redundant description may thus be omitted.

If the fire occurs in the energy storage system 10, there is a risk that the cabinet CB explodes due to its internal pressure increased by the gas caused by the fire. In addition, there is a risk of injury to the user when the door member 300 is opened while the internal pressure is increased. To prevent this risk, the energy storage system 10 may include a venting portion 500 which may lower the pressure in the cabinet CB by emitting the gas occurring in the internal space S of the cabinet CB.

The venting portion 500 may include at least one inlet 510 communicating with the internal space S of the cabinet CB and allowing the gas to flow into the inlet, and at least one outlet 520 allowing the gas flowing into the inlet port 510 to be emitted outward from the cabinet CB.

For example, referring to FIGS. 7 and 8, the venting portion 500 may be disposed in the top frame 201 of the cabinet CB.

The inlet 510 may be a hole communicating with the internal space S of the cabinet CB. The outlet 520 may be disposed in the outer surface of the cabinet CB, and may be a hole communicating with the inlet 510. The gas occurring in the internal space S of the cabinet CB may flow in through the inlet 510 and be emitted outward from the cabinet CB through the outlet 520.

The plurality of inlets 510 and the plurality of outlets 520 may be provided in the cabinet CB.

The outlet 520 may be open in a bottom part direction of the cabinet CB (for example, in the negative Z-axis direction of FIG. 7). Here, "the bottom part direction of the cabinet CB" may indicate a direction toward the ground when the energy storage system 10 is completely installed at an installation destination. Alternatively, "the bottom part direction of the cabinet CB" may indicate a downward direction based on a gravity direction. Alternatively, "the bottom part direction of the cabinet CB" may indicate a direction from the top frame 201 of the cabinet CB to its lower frame.

When open in the above direction, the outlet 520 may prevent rain, snow, or another foreign material in the external environment of the energy storage system 10 from flowing in the energy storage system 10 through the outlet 520.

In the exemplary embodiments, a separation space D may be provided between the top frame 201 and the door member 300, and the outlet 520 may communicate with the separation space D.

For example, referring to FIG. 8, the top frame 201 may include a first surface 201a facing the door member 300 in the second direction (or the Z-axis direction), that is, the height direction of the housing 200, and the outlet 520 may be a hole open in the first surface 201a.

The plurality of outlets 520 may be disposed in the first surface 201a in a third direction (or the X-axis direction) perpendicular to the second direction (or the Z-axis direction).

The top frame 201 may have a second surface 201b at least partially exposed to the internal space S of the housing 200, and at least one inlet 510 may be disposed in the second surface 201b of the top frame 201.

The top frame 201 may further include a hollow portion 530 communicating with the inlet 510 and the outlet 520. For example, referring to FIG. 8, an edge of the top frame 201 may include the hollow portion 530 extending in the third direction (the X-axis direction), and the inlet 510 and the outlet 520 may each communicate with the hollow portion 530. The gas occurring in the internal space S of the housing 200 may flow into the hollow portion 530 through the inlet 510 and then be emitted outward from the cabinet CB through the outlet 520.

In this way, the gas occurring in the cabinet CB may be properly emitted outward from the cabinet CB through the venting portion 500. Accordingly, the internal pressure of the cabinet CB may not be increased to a certain level or more, thus preventing the energy storage system 10 from exploding in advance.

In addition, the outlet 520 may be open through the separation space D between the top frame 201 and the door member 300, thereby more effectively preventing rainwater or the foreign material from flowing into the outlet 520 from the outside of the cabinet CB.

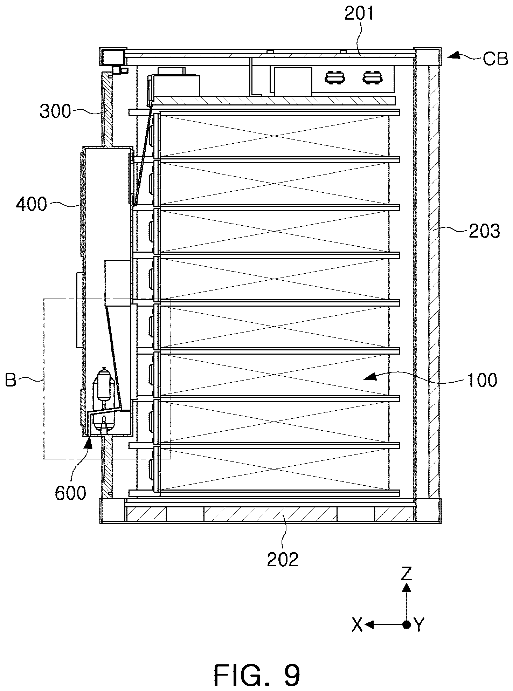

Meanwhile, in the energy storage system 10, the venting portion may be disposed in a portion of the energy storage system 10 other than the top frame 201 described above. For example, FIGS. 9 through 11 show a second venting portion 600 disposed in the door member 300 of the energy storage system 10.

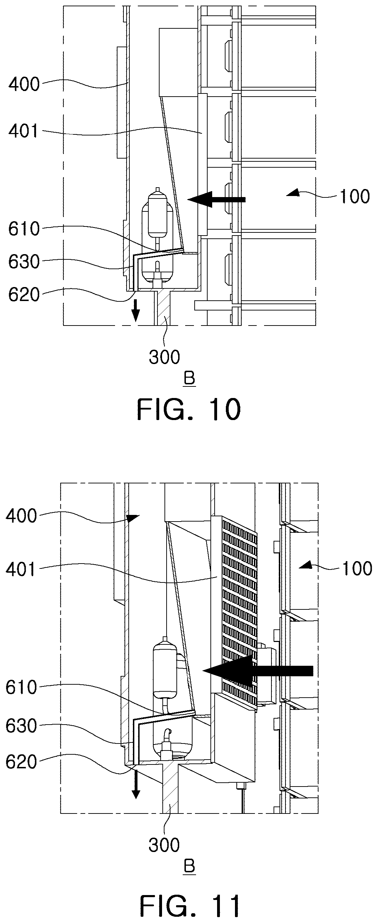

FIG. 9 is an exemplary cross-sectional view of the energy storage system 10. FIG. 10 is an exemplary view showing a gas emission structure formed in the door member 300 of the energy storage system. FIG. 11 is an exemplary view showing the gas emission structure formed in the door member 300 of the energy storage system.

The energy storage system 10 described with reference to FIGS. 9 through 11 may include all technical features of the energy storage system 10 described with reference to FIGS. 1 through 8, and its redundant description may thus be omitted.

The energy storage system 10 may further include the venting portion 600 disposed in the door member 300. In order to be distinguished from the above venting portion 500 disposed in the top frame 201, the venting portion 600 of the door member 300 may be referred to as the second venting portion 600.

The second venting portion 600 may include at least one inlet 610 communicating with the internal space S of the cabinet CB to allow the gas to flow into the inlet, and at least one outlet 620 allowing the gas flowing into the inlet port 610 to be emitted outward from the cabinet CB.

The inlet 610 may be a hole communicating with the internal space S of the cabinet CB. The outlet 620 may be disposed in the outer surface of the cabinet CB, and may be a hole communicating with the inlet 610. The gas occurring in the internal space S of the cabinet CB may flow in through the inlet 610 and be emitted outward from the cabinet CB through the outlet 620.

The energy storage system 10 may include a drain pipe 630 for discharging condensate occurring in the cooling device 400, and the inlet 610 and outlet 620 of the second venting portion 600 may communicate with the drain pipe 630.

For example, referring to FIGS. 10 and 11, the drain pipe 630 may be disposed in the cooling device 400 to discharge the condensate occurring while the cooling device 400 is operated. The inlet 610 may be disposed in one end of the drain pipe 630, and the outlet 620 may be disposed in the other end of the drain pipe 630 that is opposite to one end.

Accordingly, the drain pipe 630 of the cooling device 400 may be used as a gas flow path without a need to generate an additional gas emission structure in the cabinet CB.

A diameter of the drain pipe 630 may be large enough to allow the gas to be emitted smoothly. For example, the drain pipe 630 according to the exemplary embodiments may have a diameter larger than that of a conventional drain pipe functioning as a discharge path of the condensate. Accordingly, both of the gas and the condensate may be discharged smoothly through the drain pipe 630.

The gas occurring in the internal space S of the housing 200 may flow into the drain pipe 630 through the inlet 610 and then be emitted outward from the cabinet CB through the outlet 620.

The outlet 620 of the second venting portion 600 may be open to the bottom part direction of the cabinet CB (for example, in the negative Z-axis direction of FIG. 9). For example, referring to FIGS. 10 and 11, at least a partial surface of the door member 300 may face a bottom part of the cabinet CB, and the outlet 620 may be open in this surface. When open in the bottom part direction of the cabinet CB, the outlet 620 may prevent rain, snow, or another foreign material in the external environment of the energy storage system 10 from flowing in the energy storage system 10 through the outlet 620.

In the exemplary embodiments, the energy storage system 10 may include at least one of the venting portion 500 described with reference to FIGS. 7 and 8 and the second venting portion 600 described with reference to FIGS. 9 through 11.

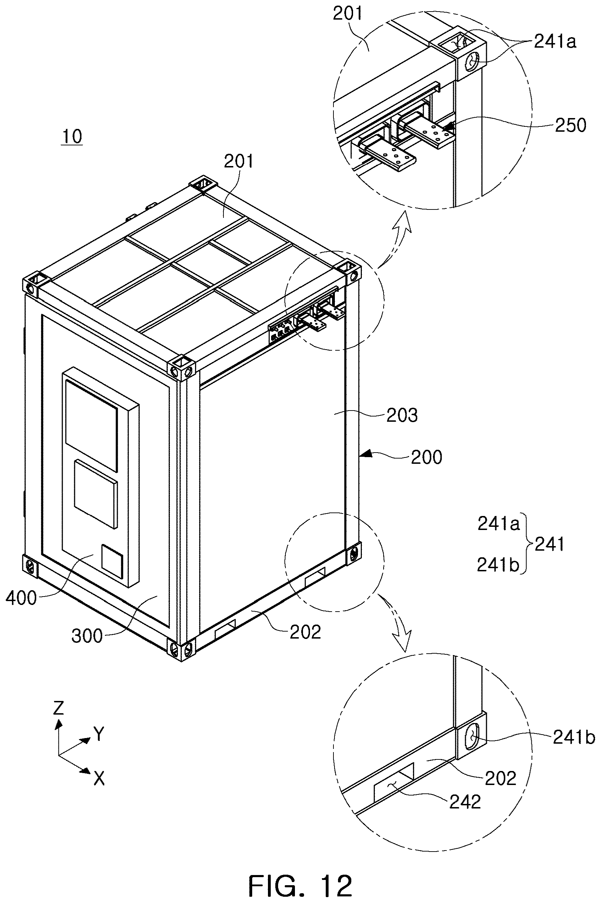

FIG. 12 is a perspective view of the energy storage system 10.

The energy storage system 10 described with reference to FIG. 12 may correspond to the energy storage system 10 described above with reference to FIGS. 1 to 11, and its redundant description may thus be omitted.

The completely manufactured energy storage system 10 may be picked up by the transport device (for example, the forklift or the crane) and transported to an installation destination.

A plurality of lifting holes 241 and 242 may be disposed in the housing 200 of the energy storage system 10 to be transported by the transport device. For example, the first lifting hole 241 may be disposed in the top side or lower side of the housing 200 to be picked up by the crane or the like. Alternatively, the second lifting hole 242 may be disposed in the bottom side of the housing 200 for a fork of the forklift, for example, to be inserted into the hole.

The first lifting hole 241 may be a hole into which the tongs or hook of the crane may be inserted. For example, as shown in FIG. 12, the first lifting hole 241 may be a hole disposed in a corner of the top frame 201 or a corner of the bottom frame 202, and open upward or sideward.

The second lifting hole 242 may be a hole disposed in the bottom part of the housing 200 for the fork of the forklift to be inserted into the hole. For example, as shown in FIG. 12, the plurality of second lifting holes 242 allowing the fork of a forklift to be inserted into the holes may be disposed in one surface of the bottom frame 202.

To prevent the transport device from colliding with the air conditioning device of the door member 300, the second lifting hole 242 may be disposed in the side surface of the housing 200 where the door member 300 is not disposed. For example, referring to FIG. 12, the door member 300 installed with the cooling device 400 may be disposed on one side of the housing 200, and the second lifting hole 242 may be open in a bottom part of the other side surface adjacent to one side of the housing 200.

The energy storage system 10 according to the exemplary embodiments may be modularized to be transported in the complete manufacturing state, thus enabling the rapid implementation of the large-capacity energy source at an installation destination.

In addition, the energy storage system 10 may include the venting portions 500 and 600 that may safely emit the gas occurring in the cabinet CB, thereby preventing the energy storage system 10 from exploding due to the internal pressure.

As set forth above, the energy storage systems according to the exemplary embodiments may rapidly implement the large-capacity energy source at an installation destination.

In addition, the energy storage system according to the exemplary embodiments may secure the increased stability by safely emitting the gas occurring in the system.

While the exemplary embodiments have been shown and described above, it will be apparent to those skilled in the art that modifications and variations could be made without departing from the scope of the present disclosure as defined by the appended claims.

## Claims

1. An energy storage system (10) comprising:
a cabinet including a mounting portion (210) capable of mounting a plurality of battery modules (100) thereon and a door member (300) capable of being opened and closed; and
a venting portion emitting gas occurring in an internal space of the cabinet,
wherein the venting portion (500, 600) includes
at least one inlet (510, 610) communicating with the internal space and allowing the gas to flow into the inlet (510, 610); and
at least one outlet (520, 620) disposed in an outer surface of the cabinet and communicating with the inlet (510, 610) .

2. The system (10, 221, 222) of claim 1, wherein the cabinet further includes a top frame (201) disposed above the mounting portion (210) and a bottom frame (202) disposed below the mounting portion (210), and
the outlet (520, 620) is open in the top frame (201) toward the bottom frame (202).

3. The system (10, 221, 222) of claim 2, wherein the door member (300) faces the mounting portion (210) in a first direction,
the top frame (201) includes a first surface (201a) facing the door member (300) in a second direction, perpendicular to the first direction, and
the outlet (520, 620) is disposed in the first surface (201a).

4. The system (10, 221, 222) of claim 3, wherein a separation space is formed between the first surface (201a) and the door member (300), and
the outlet communicates with the separation space.

5. The system (10, 221, 222) of any one of claims 2 to 4, wherein the top frame (201) includes a hollow portion (530) communicating with each of the inlet (510, 610) and the outlet (520, 620).

6. The system (10, 221, 222) of any one of claims 2 to 5, wherein the top frame (201) further includes a second surface (201b) exposed to the internal space, and
the inlet (510, 610) is disposed in the second surface (201b).

7. The system (10, 221, 222) of any one of claims 3 to 6, wherein the at least one inlet (510, 610) or the at least one outlet (520, 620) is disposed in a third direction, perpendicular to both the first direction and the second direction.

8. The system (10, 221, 222) of any one of claims 1 to 7, wherein the door member (300) further includes a cooling device (400) capable of supplying a cooling medium to the internal space, and
at least one of the inlet (510, 610) and the outlet (520, 620) is disposed in the door member (300).

9. The system (10, 221, 222) of claim 8, wherein the cooling device (400) includes a drain pipe (630) allowing condensate occurring in the cooling device (400) to flow, and
the inlet (510, 610) and the outlet communicate with the drain pipe (630).

10. The system (10, 221, 222) of claim 9, wherein the inlet (510, 610) is disposed in one end of the drain pipe (630), and the outlet (520, 620) is disposed in the other end of the drain pipe (630).

11. The system (10, 221, 222) of any one of claims 1 to 10, further comprising:
a fire extinguishing portion (700) extinguishing a flame occurring in the internal space of the cabinet; and
a guide portion (230, 410) dividing a front space formed between the plurality of battery modules (100) and the door member (300) into a plurality of regions.

12. The system (10, 221, 222) of claim 11, further comprising an electronic component (800) disposed on the inside of the door member (300),
wherein the fire extinguishing portion (700) and the electronic component (800) are disposed together in one of the plurality of regions divided by the guide portion (230, 410) .

13. The system (10, 221, 222) of claim 11 or 12, wherein the fire extinguishing portion (700) includes a fire extinguishing agent maintaining a solid state at a temperature of a preset temperature or less and having an aerosol form at a temperature of the preset temperature or more.

14. The system (10, 221, 222) of any one of claims 1 to 13, wherein the cabinet further includes a partition (204) dividing the internal space, and
the plurality of battery modules (100) are disposed on both sides of the partition (204) in a height direction of the cabinet.

15. The system (10, 221, 222) of any one of claims 1 to 14, further comprising a plurality of lifting holes (241, 242) disposed in the cabinet and allowing a transport device to be inserted into the holes.
